# EUROPEAN PATENT APPLICATION

(11) **EP 3 993 319 A1**
(43) Date of publication of application: **04.05.2022**
(21) Application number: 21205613.9
(22) Date of filing: 29.10.2021
(51) Int. Cl.: H04L 9/40, H04L 61/5007, H04L 61/5061, H04L 41/0803

(54) **SECURE DISTRIBUTION OF CONFIGURATION TO FACILITATE A PRIVACY-PRESERVING VIRTUAL PRIVATE NETWORK SYSTEM**

(30) Priority: 02.11.2020 US 202063108826 P
(71) Applicant: Pango Inc., Burlington, MA 01803 (US)
(72) Inventor: Mehta, Swair, Burlington, MA Massachusetts 01803 (US); Warrier, Ramachandra Abhilash Kumar, Burlington, MA Massachusetts 01803 (US); Sidorov, Vadim, Burlington, MA Massachusetts 01803 (US); Panisset, Eduardo Moura, Burlington, MA Massachusetts 01803 (US)
(74) Representative: Betten & Resch

(57) **Abstract**

A VPN client discovers an available VPN server and requests a private IP address for use as the source IP address of the VPN client. A configuration delivery system delivers a private IP address from a pool of addresses assigned to the VPN server. The private IP address may be accompanied with cryptographic material for establishing a VPN tunnel with the VPN server. The cryptographic material may be random integer generated by an entropy generator.

## Description

### RELATED APPLICATIONS

This application claims the benefit of U.S. Provisional Application Serial No. 63/108,826, filed November 2, 2020 and entitled "Secure distribution of configuration to facilitate a privacy-preserving virtual private network system," which is hereby incorporated herein by reference in their entirety for all purposes.

### FIELD OF THE INVENTION

The present invention relates generally to systems and methods for implementing virtual private networks (VPN).

### BACKGROUND OF THE INVENTION

Many Internet facing application systems service multiple clients over a stateless protocol such as the UDP protocol. Others are web applications providing service over HTTP protocol. Many applications of both types require maintaining session-state information on the side of the application system or encoding of state information in some for. Others pass state information to the client system for the client to replay. The session-state information may be used to provide a coherent and correct service to the correct client.

The use of a stateless layer 3 protocol such as UDP is all the more prevalent in the virtual private network (VPN) space due to the performance gains in return for a reduced reliability guarantee the protocol provides. A fundamental principle behind a secure VPN system is an association between the system's peers (VPN clients or VPN servers) and the internet protocol (IP) addresses each is allowed to use to communicate with each other ("source IP addresses"). In the context of a VPN system, the VPN client connecting to a VPN server gets assigned a private IP address also known as a tunnel IP address that ensures the VPN server can route the traffic the VPN client is generating to the correct service on another network and back from said service to the VPN client.

Utilizing a stateless protocol for an application such as a VPN presents challenges with session state management, forcing implementations to absorb complexities associated with session state management while delegating other essential privacy related functions associated with the VPN to domain implementations.

### BRIEF DESCRIPTION OF THE DRAWINGS

In order that the advantages of the invention will be readily understood, a more particular description of the invention briefly described above will be rendered by reference to specific embodiments illustrated in the appended drawings. Understanding that these drawings depict only typical embodiments of the invention and are not therefore to be considered limiting of its scope, the invention will be described and explained with additional specificity and detail through use of the accompanying drawings, in which:
Fig. 1 is a schematic block diagram of a network environment for exchanging information in order to facilitate secure configuration distribution in accordance with an embodiment of the present invention;
Fig. 2 is a process flow diagram representing a decision process of a central system that assigns private IP addresses and other configuration information for use by a VPN client in accordance with an embodiment of the present invention;
Fig. 3 is a process flow diagram of a method for discovering a VPN server in accordance with an embodiment of the present invention;
Fig. 4 is a flow diagram of for assigning IP addresses and other configuration information to the VPN client by the VPN server in accordance with an embodiment of the present invention; and
Fig. 5 is a schematic block diagram of a computing device.

### DETAILED DESCRIPTION

It will be readily understood that the components of the present invention, as generally described and illustrated in the Figures herein, could be arranged and designed in a wide variety of different configurations. Thus, the following more detailed description of the embodiments of the invention, as represented in the Figures, is not intended to limit the scope of the invention, as claimed, but is merely representative of certain examples of presently contemplated embodiments in accordance with the invention. The presently described embodiments will be best understood by reference to the drawings, wherein like parts are designated by like numerals throughout.

The invention has been developed in response to the present state of the art and, in particular, in response to the problems and needs in the art that have not yet been fully solved by currently available apparatus and methods.

Embodiments in accordance with the present invention may be embodied as an apparatus, method, or computer program product. Accordingly, the present invention may take the form of an entirely hardware embodiment, an entirely software embodiment (including firmware, resident software, micro-code, etc.), or an embodiment combining software and hardware aspects that may all generally be referred to herein as a "module" or "system." Furthermore, the present invention may take the form of a computer program product embodied in any tangible medium of expression having computer-usable program code embodied in the medium.

Any combination of one or more computer-usable or computer-readable media may be utilized. For example, a computer-readable medium may include one or more of a portable computer diskette, a hard disk, a random access memory (RAM) device, a read-only memory (ROM) device, an erasable programmable read-only memory (EPROM or Flash memory) device, a portable compact disc read-only memory (CDROM), an optical storage device, and a magnetic storage device. In selected embodiments, a computer-readable medium may comprise any non-transitory medium that can contain, store, communicate, propagate, or transport the program for use by or in connection with the instruction execution system, apparatus, or device.

Embodiments may also be implemented in cloud computing environments. In this description and the following claims, "cloud computing" may be defined as a model for enabling ubiquitous, convenient, on-demand network access to a shared pool of configurable computing resources (e.g., networks, servers, storage, applications, and services) that can be rapidly provisioned via virtualization and released with minimal management effort or service provider interaction and then scaled accordingly. A cloud model can be composed of various characteristics (e.g., on-demand self-service, broad network access, resource pooling, rapid elasticity, and measured service), service models (e.g., Software as a Service ("SaaS"), Platform as a Service ("PaaS"), and Infrastructure as a Service ("IaaS")), and deployment models (e.g., private cloud, community cloud, public cloud, and hybrid cloud).

Computer program code for carrying out operations of the present invention may be written in any combination of one or more programming languages, including an object-oriented programming language such as Java, Smalltalk, C++, or the like and conventional procedural programming languages, such as the "C" programming language or similar programming languages. The program code may execute entirely on a computer system as a stand-alone software package, on a stand-alone hardware unit, partly on a remote computer spaced some distance from the computer, or entirely on a remote computer or server. In the latter scenario, the remote computer may be connected to the computer through any type of network, including a local area network (LAN) or a wide area network (WAN), or the connection may be made to an external computer (for example, through the Internet using an Internet Service Provider).

The present invention is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions or code. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a non-transitory computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

Amongst other privacy features that may not always be under an implementation's scope, one is that a VPN system may be required to provide the ability for the same VPN client to connect to the VPN server over and over again without it being possible to identify the VPN client by its private source IP address when the VPN system is deployed in a context where the VPN service providers are obligated to provide privacy guarantees to the VPN service users.

The systems and methods described herein provide the ability for VPN clients to obtain what is considered a static configuration in a manner that builds a privacy preserving layer on the underlying VPN implementation when the VPN implementation delegates this responsibility to other layers.

According to an exemplary implementation, a VPN client discovers an available VPN server and requests a private IP address for use as the source IP address of the VPN client. A configuration delivery system delivers a private IP address from a pool of addresses assigned to the VPN server. The private IP address may be accompanied with cryptographic material for establishing a VPN tunnel with the VPN server. The cryptographic material may be random integer generated by an entropy generator.

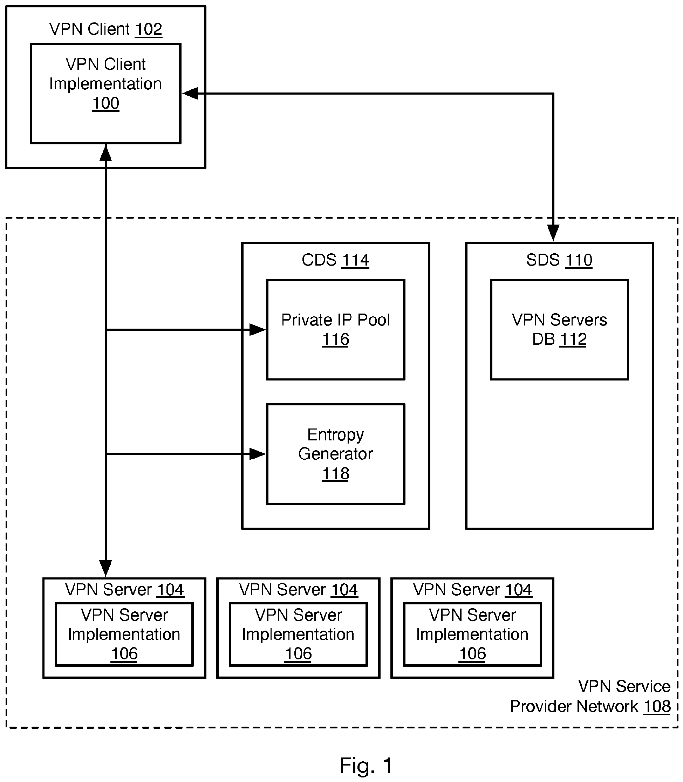

Referring to Fig. 1, the following implementation may be understood with respect to the following definitions:
VPN client-side implementation 100: An application, such as WIREGUARD implementing a VPN protocol;
VPN client application: An Application (User Interface (UI) etc.) that is implemented on top of the VPN client-side implementation to tunnel packets from the user to the VPN server;
VPN client 102: a combination of the VPN client-side implementation and the VPN client application;
Connection: A network connection between the VPN client and the VPN server 104, such as a Transport Layer Security (TLS) connection between the VPN client and the VPN server used to obtain configuration information; and
VPN Connection or VPN Tunnel: a VPN tunnel established between the VPN client and the VPN server.

VPN server-side implementations 106 (executing within VPN servers 104) may be deployed in a multi-client context wherein clients are geographically distributed. In some instances, clients may not be running a VPN client-side implementation 100 (executing within VPN Client 102) corresponding to the VPN server 104 and may execute in an environment that is not controlled by the same authority (e.g., the VPN service provider network 108 of the same VPN service provider) as the VPN server 104. Nonetheless, the VPN service provider may have an obligation to provide baseline privacy, which may include protecting the privacy of the clients while keeping their activity secure from unauthorized in-transit monitoring, providing fundamental cryptographic functions such as data encryption key rotation facility, providing perfect forward secrecy, etc.

Some VPN implementations delegate configuration needed to support baseline privacy and/or security requirements to a facilitating service or layer. The VPN implementation is therefore capable of providing baseline privacy provided the facilitating service or layer is capable of implementing secure distribution of configuration parameters. The approach described below provides a method for secure distribution of these configuration parameters.

A service discovery system (SDS) 110 may be implemented as software executing on the VPN service provider computer network 108. The SDS 110 may enable discovery of VPN servers 104 and may host a database 112 containing entries referencing available VPN servers 104. The SDS 110 may be consulted by the VPN client 102 before the VPN client 102 configures the VPN client-side implementation 100 to establish a VPN tunnel to a VPN server-side implementation 106. The SDS 110 may guide the VPN client 102 to select a VPN server 104 to communicate with or a central configuration delivery system to communicate with before any communication with a VPN server 104 is carried out. Once a VPN server 104 has been selected from available VPN servers 104, the VPN client 102 may establish a secure connection, such as a TLS-based connection, to the selected VPN server 104 in order to obtain configuration data such as a private IP address that the VPN client 102 may be required to use as its private source IP address (e.g., as the source IP address for packets sent by the VPN client 102). The VPN client 102 may also obtain cryptographic material from the VPN server, used either directly or by deriving from packets from the VPN server. The VPN client may use the cryptographic material to encrypt packets to the VPN server in order to successfully establish a VPN tunnel connection.

In some embodiments, the SDS 110 guides the VPN client 102 to a configuration delivery system (CDS) 114 that maintains a list of available unused private IP address pools 116 for each VPN server 104 of a set of VPN servers 104. The CDS 114 may also provide, as a configuration item for each VPN server 104, a cryptographically sound random integer that the VPN client side implementation 100 may use in its derivation of various encryption keys. For example, the CDS 114 may include an entropy generator 118 that is used to generate the random integer, or some other random number generator.

The CDS 114 may be kept updated about the available private IP addresses for each VPN server by computer monitoring software on the CDS 114 running in parallel with the VPN server-side implementation 106 on each VPN server 104. The monitoring software may alert the CDS 114 of any VPN clients 102 currently connected with a tunnel by periodically checking connected clients or by detecting a newly established tunnel connection (e.g., requests for private IP addresses and cryptographic material). Upon a willful disconnect by the VPN client side implementation 100, the monitoring software may again alert the CDS 114 of this fact. The CDS 114 may therefore record that the IP address used by that VPN client side implementation 100 has been returned to the IP address pool 116 of the VPN server 104 to which the VPN client 102 was connected. The IP address is then again available for assignment.

In some implementations the CDS 114 is implemented by, or makes use of, domain name service (DNS) software in order to distribute non confidential configuration information, such as the private IP address. In other implementations the CDS 114 is implemented or leverages a dynamic host configuration protocol (DHCP) service in order to obtain the private IP addresses that are returned to the VPN client as part of the secure connection routine.

In some implementations, the functions ascribed herein to the SDS 110 and the CDS 114 are implemented by one of the VPN servers 104 that provides secure configuration delivery to the VPN client-side implementation 100 and facilitates discovery of available VPN servers 104, which in absence of a service discovery mechanism may be performed through a static file with which the VPN client implementation 104 is configured upon distribution to a user.

In some VPN server-side implementations 106, there is IP management (IPM) software running alongside the VPN server-side implementation 106 that is responsible for distributing configuration information by itself or by interrogating other supporting software systems.

When the VPN server 104 is responsible for maintaining the private IP address pool (e.g., with DNS or IPM software) and a private IP address is returned to the VPN client 102 (so that the VPN client 102 may configure the VPN client-side implementation 100 to connect with such configuration), the VPN server 104 may remove the private IP address from the "available IP address pool" for a period of time and add the private IP address to a "temporary allocated pool," until such time as a client connects to the VPN server 104 with the private IP address. Along with the pool manipulation, the IPM may also configure the VPN server-side implementation 106 so that a VPN client-side implementation 100 may be allowed to connect to it.

The IPM may provide a mechanism that periodically collects private IP addresses from the "temporarily allocated pool" to check and confirm if there are any VPN clients 102 that have connected with the private IP address. If it is found that a VPN client 102 has connected to the VPN server side implementation 106 using the private IP address, the private IP address may be removed from the "temporarily allocated pool" and moved to the "allocated IP address pool." If no connection is received within a timeout period from when it was added to the "temporarily allocated pool," the private IP address may be returned to the "available IP address pool."

When the VPN server side implementation 106 receives a disconnect request from the VPN client-side implementation 100, the IPM returns the private IP address from the "allocated IP address pool" to the "available IP address pool." There may be a mechanism in the IPM that periodically checks if a VPN client 102 is connected using a private IP address in the "Allocated IP address pool" and returns that private IP address to the "temporary allocated pool" if the last packet from the VPN client 102 was received more than a configurable time limit before when the check is performed.

In some embodiments, the VPN client-side implementation 100 uses the provided configuration in order to enhance the privacy and security properties of the underlying VPN implementation, such as making sure connections with the VPN server 104 are indeed private by periodically obtaining a different private source IP address - not just relying on the VPN server 104 or the CDS 114 to provide the VPN client 102 a new or a different private IP address - such as when the traffic going through the VPN tunnel is low. This may apply to the cryptographic value being sent to the VPN client implementation as well, i.e., the VPN client-side implementation 100 may periodically request a new cryptographic value from the CDS 114, such as when traffic going through the VPN tunnel is low.

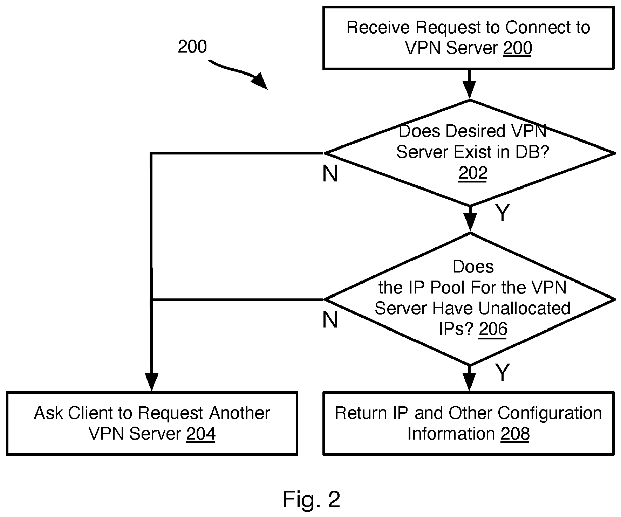

Fig. 2 illustrates a method 200 that may be executed by the CDS 114. The CDS 114 may receive 202 a request to connect to a particular VPN server 104 ("the requested VPN server"), such as from the VPN client 102. The CDS 114 evaluates 206 the private IP pool 116 to determine whether the requested VPN server has an IP pool mapped to it in the 116. If not, the CDS 114 transmits 204 a request to the VPN client 102 to select a different VPN server (e.g., request another from the SDS 110). The method 200 may be preceded by the VPN client 102 obtaining an identifier of the requested VPN server from the SDS 110 as described above.

If the requested VPN server is found 202 to be referenced in the private IP pool 116, the CDS 114 may evaluate 206 whether the private IP pool 116 indicates that there is an unallocated IP address available. If not, then step 204 is performed. If so, then the CDS 114 may return 208 an available IP address to the VPN client 102 from the IP pool of the requested VPN server. Step 208 may further include returning cryptographic material (such as generated using entropy generator 118) to the VPN client 102.

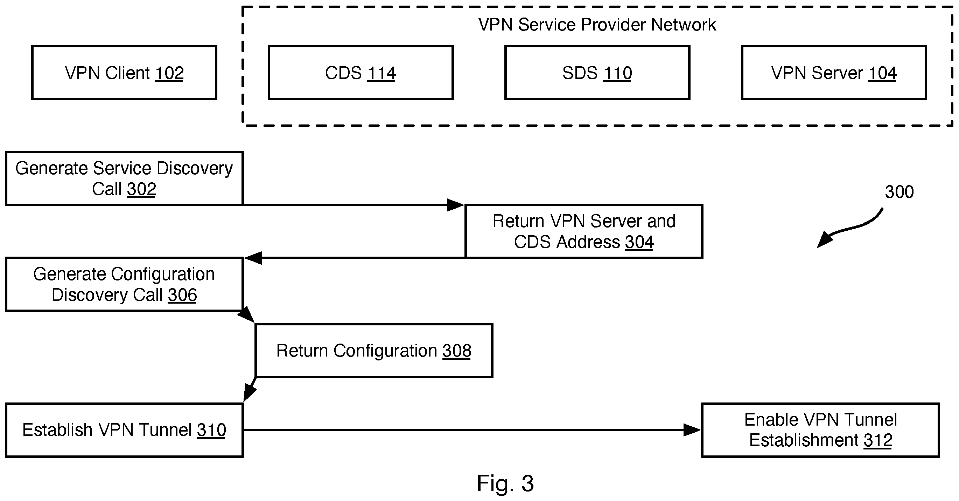

Fig 3. illustrates an example method 300 for establishing a VPN tunnel between a VPN client 102 and a VPN server 104. The method 300 may include the VPN client 102 generating 302 a service discovery call 302 to the SDS 110. The SDS 110 receives the service discovery call and, in response, selects a VPN server 104 for use by the VPN client 102 and returns 304 a references to the selected VPN server 104 and an address of the CDS 114. The VPN client receives the response from the SDS 110 and generates 306 a configuration discovery call to the CDS 114 referencing the selected VPN server 104. The CDS 114 receives the configuration discovery call and generates and returns 308 configuration information to the VPN client 102, the configuration information including a private IP address from the IP address pool of the selected VPN server and cryptographic information, such as generated using entropy generator 118. The VPN client 102 then uses the configuration information to establish 310 a VPN tunnel with the selected VPN server 104. The selected VPN server 104 likewise enables 312 establishment of the VPN tunnel between the VPN client 310 and the selected VPN server 104.

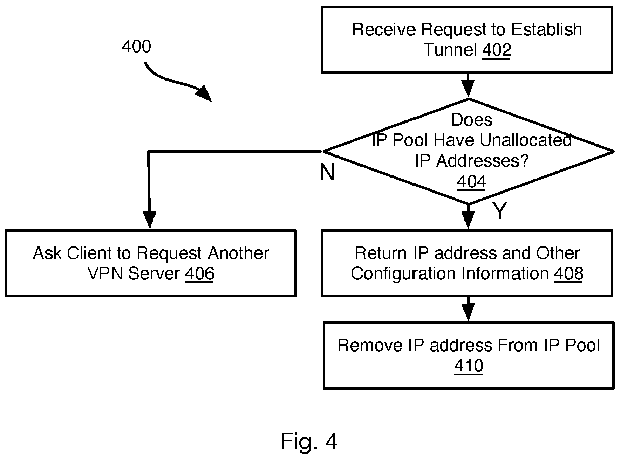

Fig. 4 illustrates a method 400 that may be implemented by a VPN server 104 that performs IP address management (e.g., using DNS software or IPM). The method 400 may include the VPN server 104 receiving 402, from a VPN client 102, a request to establish a VPN tunnel. The VPN server 104 evaluates 404 whether the private IP address pool of the VPN server 104 has available IP addresses. If not, the VPN server 104 transmits 406 a request to the VPN client 102 to request establishment of a tunnel with another VPN server. If so, the VPN server returns 408 an IP address from the private IP address pool along with other configuration information, such as cryptographic material for encrypting data transmitted between the VPN server 104 and the VPN client. The VPN server 104 and VPN client 102 then establish a VPN tunnel using the VPN client-side implementation 100 and VPN server-side implementation 106. The VPN server 104 may also remove 410 the IP address returned at step 408 from the private IP address pool.

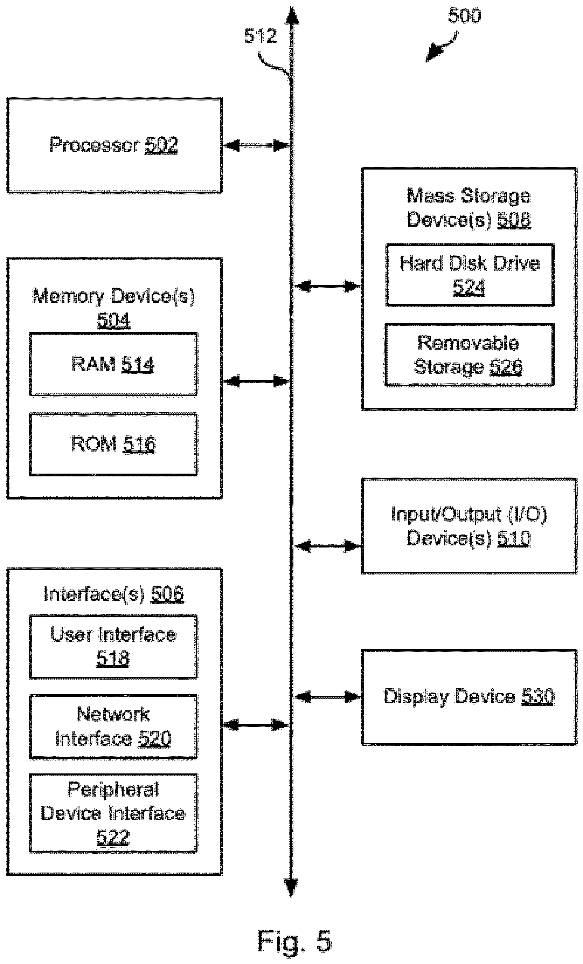

Computing devices (computing devices hosting VPN client 102, VPN server 104, SDS 110, CDC 114, etc.), networking components, and modules described herein may have some or all of the attributes of the computing device 500 of Fig. 5. In particular, components described above as being a computer or a computing device may have some or all of the attributes of the computing device 500 of Fig. 5. Fig. 5 is a block diagram illustrating an example computing device 500 which can be used to implement the systems and methods disclosed herein

Computing device 500 includes one or more processor(s) 502, one or more memory device(s) 504, one or more interface(s) 506, one or more mass storage device(s) 508, one or more Input/Output (I/O) device(s) 510, and a display device 530 all of which are coupled to a bus 512. Processor(s) 502 include one or more processors or controllers that execute instructions stored in memory device(s) 504 and/or mass storage device(s) 508. Processor(s) 502 may also include various types of computer-readable media, such as cache memory.

Memory device(s) 504 include various computer-readable media, such as volatile memory (e.g., random access memory (RAM) 514) and/or nonvolatile memory (e.g., read-only memory (ROM) 516). Memory device(s) 504 may also include rewritable ROM, such as Flash memory.

Mass storage device(s) 508 include various computer readable media, such as magnetic tapes, magnetic disks, optical disks, solid-state memory (e.g., Flash memory), and so forth. As shown in FIG. 5, a particular mass storage device is a hard disk drive 524. Various drives may also be included in mass storage device(s) 508 to enable reading from and/or writing to the various computer readable media. Mass storage device(s) 508 include removable media 526 and/or non-removable media.

I/O device(s) 510 include various devices that allow data and/or other information to be input to or retrieved from computing device 500. Example I/O device(s) 510 include cursor control devices, keyboards, keypads, microphones, monitors or other display devices, speakers, printers, network interface cards, modems, lenses, CCDs or other image capture devices, and the like.

Display device 530 includes any type of device capable of displaying information to one or more users of computing device 500. Examples of display device 530 include a monitor, display terminal, video projection device, and the like.

Interface(s) 506 include various interfaces that allow computing device 500 to interact with other systems, devices, or computing environments. Example interface(s) 506 include any number of different network interfaces 520, such as interfaces to local area networks (LANs), wide area networks (WANs), wireless networks, and the Internet. Other interface(s) include user interface 518 and peripheral device interface 522. The interface(s) 506 may also include one or more user interface elements 518. The interface(s) 506 may also include one or more peripheral interfaces such as interfaces for printers, pointing devices (mice, track pad, etc.), keyboards, and the like.

Bus 512 allows processor(s) 502, memory device(s) 504, interface(s) 506, mass storage device(s) 508, and I/O device(s) 510 to communicate with one another, as well as other devices or components coupled to bus 512. Bus 512 represents one or more of several types of bus structures, such as a system bus, PCI bus, IEEE 1394 bus, USB bus, and so forth.

For purposes of illustration, programs and other executable program components are shown herein as discrete blocks, although it is understood that such programs and components may reside at various times in different storage components of computing device 500, and are executed by processor(s) 502. Alternatively, the systems and procedures described herein can be implemented in hardware, or a combination of hardware, software, and/or firmware. For example, one or more application specific integrated circuits (ASICs) can be programmed to carry out one or more of the systems and procedures described herein.

In the above disclosure, reference has been made to the accompanying drawings, which form a part hereof, and in which is shown by way of illustration specific implementations in which the disclosure may be practiced. It is understood that other implementations may be utilized and structural changes may be made without departing from the scope of the present disclosure. References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Implementations of the systems, devices, and methods disclosed herein may comprise or utilize a special purpose or general-purpose computer including computer hardware, such as, for example, one or more processors and system memory, as discussed herein. Implementations within the scope of the present disclosure may also include physical and other computer-readable media for carrying or storing computer-executable instructions and/or data structures. Such computer-readable media can be any available media that can be accessed by a general purpose or special purpose computer system. Computer-readable media that store computer-executable instructions are computer storage media (devices). Computer-readable media that carry computer-executable instructions are transmission media. Thus, by way of example, and not limitation, implementations of the disclosure can comprise at least two distinctly different kinds of computer-readable media: computer storage media (devices) and transmission media.

Computer storage media (devices) includes RAM, ROM, EEPROM, CD-ROM, solid state drives ("SSDs") (e.g., based on RAM), Flash memory, phase-change memory ("PCM"), other types of memory, other optical disk storage, magnetic disk storage or other magnetic storage devices, or any other medium which can be used to store desired program code means in the form of computer-executable instructions or data structures and which can be accessed by a general purpose or special purpose computer.

An implementation of the devices, systems, and methods disclosed herein may communicate over a computer network. A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer, the computer properly views the connection as a transmission medium. Transmissions media can include a network and/or data links, which can be used to carry desired program code means in the form of computer-executable instructions or data structures and which can be accessed by a general purpose or special purpose computer. Combinations of the above should also be included within the scope of computer-readable media.

Computer-executable instructions comprise, for example, instructions and data which, when executed at a processor, cause a general purpose computer, special purpose computer, or special purpose processing device to perform a certain function or group of functions. The computer executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the disclosure may be practiced in network computing environments with many types of computer system configurations, including, an in-dash vehicle computer, personal computers, desktop computers, laptop computers, message processors, hand-held devices, multi-processor systems, microprocessor-based or programmable consumer electronics, network PCs, minicomputers, mainframe computers, mobile telephones, PDAs, tablets, pagers, routers, switches, various storage devices, and the like. The disclosure may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

Further, where appropriate, functions described herein can be performed in one or more of: hardware, software, firmware, digital components, or analog components. For example, one or more application specific integrated circuits (ASICs) can be programmed to carry out one or more of the systems and procedures described herein. Certain terms are used throughout the description and claims to refer to particular system components. As one skilled in the art will appreciate, components may be referred to by different names. This document does not intend to distinguish between components that differ in name, but not function.

It should be noted that the sensor embodiments discussed above may comprise computer hardware, software, firmware, or any combination thereof to perform at least a portion of their functions. For example, a sensor may include computer code configured to be executed in one or more processors, and may include hardware logic/electrical circuitry controlled by the computer code. These example devices are provided herein purposes of illustration, and are not intended to be limiting. Embodiments of the present disclosure may be implemented in further types of devices, as would be known to persons skilled in the relevant art(s).

At least some embodiments of the disclosure have been directed to computer program products comprising such logic (e.g., in the form of software) stored on any computer useable medium. Such software, when executed in one or more data processing devices, causes a device to operate as described herein.

While various embodiments of the present disclosure have been described above, it should be understood that they have been presented by way of example only, and not limitation. It will be apparent to persons skilled in the relevant art that various changes in form and detail can be made therein without departing from the spirit and scope of the disclosure. Thus, the breadth and scope of the present disclosure should not be limited by any of the above-described exemplary embodiments, but should be defined only in accordance with the following claims and their equivalents.

The foregoing description has been presented for the purposes of illustration and description. It is not intended to be exhaustive or to limit the disclosure to the precise form disclosed. Many modifications and variations are possible in light of the above teaching. Further, it should be noted that any or all of the aforementioned alternate implementations may be used in any combination desired to form additional hybrid implementations of the disclosure.

## Claims

1. A method for distributing virtual private network (VPN) configuration data comprising:
receiving, by a server system, a configuration request for virtual private network (VPN) connection information from a VPN client; and
in response to the configuration request, returning, by the server system, a private internet protocol (IP) address to the VPN client to use as a source IP address for the VPN client.

2. The method of claim 1, further comprising:
in response to the configuration request, returning cryptographic material for establishing an encrypted tunnel with a VPN server.

3. The method of claim 2, wherein the cryptographic material is a random integer as the cryptographic material.

4. The method of one of claims 1 to 3, further comprising:
receiving, by the server system, from the VPN client, a request for a VPN server identifier; and
returning, by the server system, to the VPN client, the VPN server identifier, the private IP address being assigned to a pool of IP addresses associated with the VPN server identifier.

5. A system comprising one or more processing units and one or more memory units operably coupled to the one or more processing units, the one or more memory units storing executable code effective to cause the one or more processing units to:
receive a configuration request for virtual private network (VPN) connection information from a VPN client; and
in response to the configuration request, return a private internet protocol (IP) address to the VPN client to use as a source IP address for the VPN client.

6. The system of claim 5, wherein the executable code is further effective to cause the one or more processing units to:
in response to the configuration request, return cryptographic material for establishing an encrypted tunnel with a VPN server.

7. The system of claim 6, wherein the executable code is further effective to cause the one or more processing units to generate a random integer as the cryptographic material; and
, wherein optionally the executable code is further effective to cause the one or more processing units to generate the random integer using an entropy generator.

8. The system of one of claims 6 or 7, wherein the VPN server is different computing device than the system; and/or
wherein the private IP address is in a pool of IP addresses assigned to the VPN server.

9. The system of claim 8, wherein the executable code is further effective to cause the one or more processing units to remove the private IP address from the pool of IP addresses.

10. The system of claim 9, wherein the executable code is further effective to cause the one or more processing units to:
move the private IP address to a pool of temporarily allocated IP addresses; and
move the private IP address to a pool of allocated IP addresses in response to detecting the VPN client establishing a VPN tunnel using the private IP address; or
wherein the executable code is further effective to cause the one or more processing units to:
move the private IP address to a pool of temporarily allocated IP addresses; and
move the private IP address back to the pool of IP addresses in response to expiration of a timeout period without detecting the VPN client establishing a VPN tunnel using the private IP address.

11. The system of one of claims 7 to 10, wherein the executable code is further effective to cause the one or more processing units to:
receive a server request for a VPN server identifier; and
in response to the server request, return a reference to the VPN server.

12. The system of one of claims 5 to 11, wherein the executable code is further effective to cause the one or more processing units to select the private IP address using IP management software.

13. A non-transitory computer readable medium storing executable code that, when executed by one or more processing devices, causes the one or more processing devices to:
transmit a configuration request for virtual private network (VPN) connection information to a configuration delivery system;
in response to the configuration request, receive a private internet protocol (IP) address; and
request creation of a VPN tunnel with a VPN server with the private IP address as a source address.

14. The non-transitory computer readable medium of claim 13, wherein the executable code further causes the one or more processing devices to:
receive cryptographic material in response to the configuration request; and
use the cryptographic material to encrypt data sent over the VPN tunnel; and
wherein optionally the cryptographic material is a random integer.

15. The non-transitory computer readable medium of claim 13 or 14, wherein the executable code further causes the one or more processing devices to:
transmit a server request to a server discovery system;
receive an identifier of the VPN server; and
transmit the configuration request with the identifier of the VPN server; and/or
wherein the executable code further causes the one or more processing devices to:
transmit a server request to a server discovery system;
receive an identifier of the VPN server and an identifier of a configuration delivery system; and
transmit the configuration request to the configuration delivery system with the identifier of the VPN server.
